# EUROPEAN PATENT APPLICATION

(11) **EP 1 273 234 A1**
(43) Date of publication of application: **08.01.2003**
(21) Application number: 02077636.5
(22) Date of filing: 03.07.2002
(51) Int. Cl.: A01N 43/88

(54) **Preservative formulations comprising an oxathiazine and amine oxides**

(71) Applicant: JANSSEN PHARMACEUTICA N.V., 2340 Beerse (BE)
(72) Inventor: Van der Flaas, Mark Arthur Josepha, 2340 Beerse (BE)

(57) **Abstract**

The present invention relates to the use of amine oxides to enhance the activity of fungicidal formulations comprising a fungicidal oxathiazine compound. It also relates to formulations comprising a fungicidal oxathiazine compound which is bethoxazin and amine oxides. These formulations are useful for the protection of objects made of wood, thatch or the like, biodegradable material and textiles against deterioration due to the action of fungi.

## Description

The present invention relates to the use of amine oxides to enhance the activity of fungicidal formulations comprising a fungicidal oxathiazine compound. It also relates to formulations comprising a fungicidal oxathiazine compound and amine oxides. These formulations are useful for the protection of objects made of wood, thatch or the like, biodegradable material and textiles against deterioration due to the action of fungi.

Oxathiazines, and their use as herbicides, fungicides, plant dessicants and defoliants, are described in EP-0,104,940. Other oxathiazines are described in WO-95/06043 as bactericidal and fungicidal compounds useful in wood-protection. WO-95/05739 describes the antibacterial, anti-yeast, antifungal, algicidal, anti-crustacean and molluscicidal properties of oxathiazines and their use for anti-fouling purposes. One of the oxathiazines is bethoxazin which is the ISO name of the compound 3-(benzo[b]thien-2-yl)-5,6-dihydro-1,4,2-oxathiazine 4-oxide, which compound may be represented by the formula

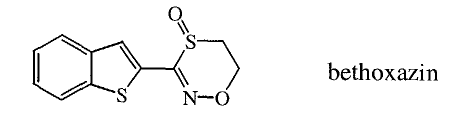

Wood preservative formulations comprising in synergistic proportions an oxathiazine compound plus one or more of a quaternary ammonium compound and a triazole compounds have been described in WO-00/32371.

WO-00/71314 discloses compositions containing an azole and an amine oxide for use as wood preservatives and as fungicides in agricultural products.

As with most individual active ingredients, fungicidal oxathiazine compounds such as bethoxazin by themselves do not provide protection against all fungi, bacteria, and other microorganisms which it is desirous to protect any objects made of wood, thatch or the like, biodegradable material and textiles against.

Surprisingly, it has been found that by addition of amine oxides, the efficacy of formulations comprising oxathiazine compounds, such as for example bethoxazin, is significantly increased. Therefore the fungicidal formulations of the present invention comprise an oxathiazine compound such as bethoxazin and amine oxides to increase the efficacy or performance, and a carrier.

According to one aspect of the present invention, fungicidal compositions are provided comprising, within certain broad limits of composition (*i.e.* in certain respective proportions or amounts of the active ingredients) easily determinable by those skilled in the art, the combination of an oxathiazine compound such as bethoxazin and amine oxides in synergistic proportions, and a carrier.

The oxathiazine compounds such as bethoxazin may be present in their base form or in a salt form, the latter being obtained by reaction of the base form with an appropriate acid. Appropriate acids comprise, for example, inorganic acids, such as the hydrohalic acids, *i.e.* hydrofluoric, hydrochloric, hydrobromic and hydroiodic, sulfuric acid, nitric acid, phosphoric acid, phosphinic acid and the like; or organic acids, such as, for example, acetic, propanoic, hydroxyacetic, 2-hydroxypropanoic, 2-oxopropanoic, ethanedioic, propanedioic, butanedioic, (Z)-2-butenedioic, (E)-2-butenedioic, 2-hydroxybutanedioic, 2,3-dihydroxybutanedioic, 2-hydroxy-1,2,3-propanetricarboxylic, methanesulfonic, ethanesulfonic, benzenesulfonic, 4-methylbenzenesulfonic, cyclohexanesulfamic, 2-hydroxybenzoic, 4-amino-2-hydroxybenzoic and the like acids.

Wherever the term "an oxathiazine", "an oxathiazine compound", "a fungicidal oxathiazine" or "bethoxazin" is used, it is meant to include said compound both in its base or in its salt form, the latter being obtained by reaction of the base form with an appropriate acid. The term salt form as used hereinabove also comprises the solvates which the oxathiazine compounds are able to form. Examples of such solvates are e.g., the hydrates, alcoholates and the like.

The amine oxide may be selected from the group consisting of
(i) a trialiphatic substituted amine oxide,
(ii) an N-alkylated cyclic amine oxide,
(iii) a dialkylpiperazine di-*N*-oxide,
(iv) an alkyldi(poly(oxyalkylene))amine oxide,
(v) a dialkylbenzylamine oxide,
(vi) a fatty amidopropyldimethyl amine oxide,
(vii) a diamine oxide,
(viii) a triamine oxide, and
(ix) any combination of any of the foregoing.

Preferred trialiphatic substituted amine oxides have the formula R¹R²R³N→0, where R¹ is a linear, branched, cyclic or any combination thereof C₈ to C₄₀ saturated or unsaturated group; and R² and R³ independently are linear, branched, or any combination thereof C₁ to C₄₀ saturated or unsaturated groups. R¹, R², and R³ independently may be alkyl, alkenyl, or alkynyl groups. More preferably, R¹ is a linear, branched, cyclic or any combination thereof C₈ to C₂₂ saturated or unsaturated group, such as coco, hydrogenated tallow, soya, decyl, hexadecyl, and oleyl; and R² and R³ independently are linear, branched, or any combination thereof C₁ to C₂₂ saturated or unsaturated groups, such as coco, hydrogenated tallow, soya, decyl, and hexadecyl.

A preferred trialiphatic substituted amine oxide is a dialkylmethylamine oxide having the formula R¹R²CH₃N→0, where R¹ and R² are defined as above. Another preferred trialiphatic substituted amine oxide is an alkyldimethylamine oxide having the formula R¹(CH₃)₂N→0, where R¹ is defined as above. More preferred alkyldimethylamine oxides have the formula R¹⁹(CH₃)₂N→0, where R¹⁹ is a linear or branched C₈-C₁₈ alkyl or alkenyl.

Preferably, R¹⁹ is a linear or branched C₈-C₁₆ alkyl. Alkyldimethylamine oxides are non-toxic and non-mutagenic surfactants. Suitable alkyldimethylamine oxides include, but are not limited to, a C₁₀alkyldimethylamine oxide, a C₁₀-C₁₄alkyldimethylamine oxide, a C₁₂-C₁₆alkyldimethylamine oxide, a C₁₆-C₁₈alkyldimethylamine oxide, and any combination of any of the foregoing.

Preferred *N*-alkylated cyclicamine oxides have the formula R⁴R⁵R⁶N→O where R⁴ is defined as R¹ above and R⁵ and R⁶ are linked to form a cyclic group. The cyclic group typically contains from 4 to 10 carbon atoms and may optionally contain oxygen, sulfur, nitrogen, or any combination of any of the foregoing. More preferred *N*-alkylated cyclicamine oxides include, but are not limited to, an alkylmorpholine *N*-oxide, a dialkylpiperazine di-*N*-oxide, and any combination of any of the foregoing.

Preferred alkylmorpholine *N*-oxides have the formula 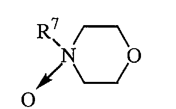 where R⁷ is defined as R¹ above. According to a more preferred embodiment, R⁷ is a linear or branched C₈ to C₁₆alkyl. Examples of preferred alkylmorpholine N-oxides include, but are not limited to, cetyl morpholine N-oxide and lauryl morpholine N-oxide.

Preferred dialkylpiperazine di-*N*-oxides have the formula 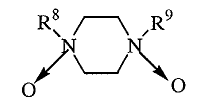 where R⁸ is defined as R¹ above and R⁹ is defined as R² above.

Preferred alkyldi(poly(oxyalkylene))amine oxides have the formula 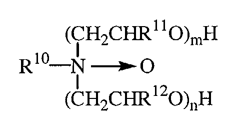 where R¹⁰ is defined as R¹ above; R¹¹ and R¹² independently are H or CH₃; and m and n independently are integers from 1 to 10.

Preferred dialkylbenzylamine oxides have the formula R¹³R¹⁴R¹⁵N→0, where R¹³ is defined as R¹ above; R¹⁴ is defined as R² above; and R¹⁵ is benzyl. More preferred dialkylbenzylamine oxides include, but are not limited to, alkylbenzylmethylamine oxides having the formula R¹³R¹⁵CH₃N→0 where R¹³ and R¹⁵ are defined as above. According to a more preferred embodiment, R¹³ is a linear or branched C₈-C₁₂ alkyl.

Preferred fatty amidopropyldimethyl amine oxides have the formula 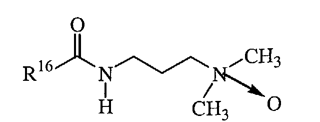 where R¹⁶ is defined as R¹ above.

Preferred diamine oxides have the formula 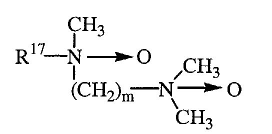 where R¹⁷ is defined as R¹ above; and m is an integer from about 1 to about 10.

Preferred triamine oxides have the formula 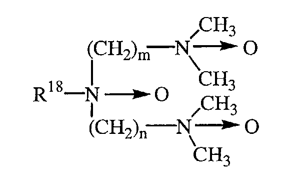 where R¹⁸ is defined as R¹ above; and m and n independently are integers from 1 to 10.

Long chain (C₁₆ or greater) amine oxides, such as hexadecylamine oxides and hydrogenated tallow amine oxides, are particularly preferable for imparting waterproofing properties to the composition. Short chain (C₁₄ and shorter) amine oxides aide in solubilizing the azole and long chain amine oxides.

The following amine oxides are commercially available. The abbreviation "DMAO" stands for dimethylamine oxide.
(a) coco-alkyl (C₁₂-C₁₆) dimethylamine oxide, (coco-DMAO) or N,N-dimethyl coco amine oxide, which is commercially available from Lonza Inc. of Fair Lawn, New Jersey, USA, as Barlox® 12;
(b) branched alkyl (C₁₀-C₁₄) dimethylamine oxide, or (branched alkyl (C₁₀-C₁₄)DMAO), which is available as Barlox® 12i from Lonza Inc. of Fair Lawn, New Jersey, USA;
(c) octyl dimethylamine oxide (octyl-DMAO), decyl dimethylamine oxide (decyl-DMAO), dodecyldimethylamine oxide (dodecyl-DMAO), tetradecyl dimethylamine oxide (tetradecyl-DMAO), hexadecyl dimethylamine oxide (hexadecyl-DMAO), octadecyl dimethylamine oxide (octadecyl-DMAO), which are respectively commercially available from Lonza Inc. of Fair Lawn, New Jersey, USA, as FMB AO-8™, Barlox® 10S, Barlox® 12S, Barlox® 14, Barlox® 16S, and Barlox® 18S;
(d) coco-alkyl-di(hydroxyethyl)amine oxide and tallow-alkyl-di(hydroxyethyl)amine oxide which are available as Aromox™ C/12 and Aromox™ T/12 from Akzo Chemical of Chicago, Illinois, USA.

Barlox® 10S, 12, 12i, 14, and 16S are 30% (w/w) aqueous solutions of their corresponding amine oxides. Barlox® 18S and FMBAO-8 are 25% and 40% (w/w) aqueous solutions of their corresponding amine oxides.

The relative proportions of the oxathiazine compound such as bethoxazin and amine oxides in the embodied fungicidal compositions are those proportions which result in unexpected enhanced efficacy, preferably synergistic, against fungi, when compared to a composition including, as an active ingredient, either an oxathiazine alone or the amine oxides alone. As will readily be understood by those skilled in the art, the said enhanced efficacy may be obtained within various proportions of the oxathiazine compound and the amine oxides in the fungicidal composition, depending on the kind of fungus towards which efficacy is measured and the substrate to be treated. As a general rule, however, it may be said that for most fungi the suitable proportions by weight of the amount of the one or more fungicidal oxathiazine compounds to amine oxides in the active composition should lie in the range from 5:1 to 1:500, preferably from 1:1 to 1:100, more preferably from 1:1 to 1:50.

Ready-to-use formulations typically comprise a fungicidally effective amount of an oxathiazine compound and amine oxide. Generally, the ready-to-use formulations comprise a fungicidal enhancing effective amount of amine oxide, *i.e.* an amount of amine oxide sufficient to enhance the fungicidal efficacy of the oxathiazine compound. In particular it is contemplated that the ready-to-use formulations of the present invention comprise an oxathiazine compound in a range from 0.01% (w/v) to 20% (w/v), preferably from 0.1% (w/v) to 5% (w/v). Amine oxides in such ready-to-use formulations are present in a range from 0.1% (w/v) to 50% (w/v), preferably from 1% (w/v) to 30% (w/v). Said ready-to-use formulations may be obtained by diluting a concentrated composition with an appropriate diluent such as e.g. water.

The fungicidal compositions of the present invention are useful in the preservation of wood, wood products, and biodegradable materials and protect said materials against fungal attack and destruction. As wood or wood products which can be preserved with the fungicidal compositions according to the present invention is considered, for example, wood products such as timber, lumber, railway sleepers, telephone poles, fences, wood coverings, wicker-work, windows and doors, plywood, particle board, waferboards, chipboard, joinery, timber used above ground in exposed environments such as decking and timber used in ground contact or fresh water or salt water environments, bridges or wood products which are generally used in housebuilding, construction and carpentry. As biodegradable materials besides wood which can benefit from treatment with the formulations of the invention include cellulosic material such as cotton. Also, leather, textile materials and even synthetic fibres, hessian, rope and cordage.

Wood which is preserved from staining, discoloring and decay is meant to be protected from for example, moulding, rotting, loss of its useful mechanical properties such as breaking strength, resistance to shock and shearing strength, or decrease of its optical or other useful properties due to the occurrence of odour, staining and spot formation. These phenomena are caused by a number of micro-organisms of which the following are typical examples :

| Wood-discoloring fungi: | |
|---|---|
| 1: Ascomycetes | *Ceratocystis* e.g. *Ceratocystis minor.* |
| | *Aureobasidium* e.g. *Aureobasidium pullulans* |
| | *Sclerophoma* e.g. *Sclerophoma pithyophila* |
| | *Cladosporium* e.g. *Cladosporium herbarum* |
| 2: Deuteromycetes | *Fungi imperfecti* |
| | *Aspergillus* e.g. *Aspergillus niger* |
| | *Dactylium* e.g. *Dactylium fusarioides* |
| | *Penicillium* e.g. *P. brevicaule*, *P. variabile*, *P. funiculosum* or *P. glaucum* |
| | *Scopularia* e.g. *Scopularia phycomyces* |
| | *Trichoderma* e.g. *Trichoderma viride* or *Trichoderma lignorum.* |
| | *Altemaria* e.g. *Alternaria tenius*, *Alternaria altemata* |
| 3: Zygomycetes | *Mucor* e.g. *Mucor spinorus.* |

| Wood-destroying fungi | |
|---|---|
| 1: Soft-rot Fungi | *Chaetomium* e.g. *Ch. globosum* or *Ch. alba-arenulum* |
| | *Humicola* e.g. *Humicola grisea* |
| | *Petriella* e.g. *Petriella setifera* |
| | *Trichurus* e.g. *Trichurus spiralis.* |
| 2: White and brown rot Fungi | *Coniophora* e.g. *Coniophora puteana* |
| | *Coriolus* e.g. *Coriolus versicolor* |
| | *Donkioporia* e.g. *Donkioporia expansa* |
| | *Glenospora* e.g. *Glenospora graphii* |
| | *Gloeophyllum* e.g. *Gl. abietinum, Gl. adoratum, Gl. protactum,* |
| | *Gl. sepiarium* or *Gl. trabeum* |
| | *Lentinus* e.g. *L. cyathiformes, L. edodes, L*. *lepideus, L. grinus* or *L. squarrolosus* |
| | *Paxillus* e.g. *Paxillus panuoides* |
| | *Pleurotus* e.g. *Pleurotis ostreatus* |
| | *Poria* e.g. *P. monticola, P. placenta, P. vaillantii or P. vaporaria* |
| | *Serpula* (*Merulius*) e.g. *Serpula himantoides* or *Serpula lacrymans* |
| | *Stereum* e.g. *Stereum hirsutum* |
| | *Trychophyton* e.g. *Trychophyton mentagrophytes* |
| | *Tyromyces* e.g. *Tyromyces palustris.* |

In order to protect wood from decay it is treated with a composition according to the present invention. Such treatment is applied by several different procedures such as, for example, by treating the wood in closed pressure or vacuum systems, in thermal or dip systems and the like, or by a wide variety of surface treatments, e.g. by spraying, atomizing, dusting, scattering, pouring, brushing, dipping, soaking or impregnating the wood with a fungicidal composition of the present invention.

The present invention provides a method of preserving wood, wood products or biodegradable materials which comprises applying to said wood, wood products or biodegradable materials a fungicidal composition comprising an oxathiazine compound such as e.g. bethoxazin, amine oxides, and a carrier. In a further aspect a method is provided of preserving wood, wood products or biodegradable materials which comprises applying to said wood, wood products or biodegradable materials a fungicidal composition comprising the combination of an oxathiazine compound and amine oxides in synergistic proportions, and a carrier.

Compositions comprising an oxathiazine compound and amine oxides, may also be used in a variety of other applications :
- industrial aqueous process fluids, e.g. cooling waters, pulp and papermill process waters and suspensions, secondary oil recovery systems, spinning fluids, metal working fluids, and the like
- in-tank/in-can protection of aqueous functional fluids, e.g. polymer emulsions, water based paints and adhesives, glues, starch slurries, thickener solutions, gelatine, wax emulsions, inks, polishes, pigment and mineral slurries, rubber latexes, concrete additives, drilling muds, toiletries, aqueous cosmetic formulations, pharmaceutical formulations, and the like.

The fungicidal compositions of the present invention comprise an oxathiazine compound and amine oxides, and a carrier. These carriers are any material or substance with which said fungicidal compositions are formulated in order to facilitate their application/dissemination to the locus to be treated, for instance by dissolving, dispersing, or diffusing the said compositions, and/or to facilitate their storage, transport or handling without impairing their antifungal effectiveness. Said acceptable carriers may be a solid or a liquid or a gas which has been compressed to form a liquid, *i.e.* the compositions of this invention can suitably be used as concentrates, emulsions, solutions, granulates, dusts, sprays, aerosols, pellets, or powders. In many instances the fungicidal compositions of the present invention to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Such concentrates can be diluted to a ready to use mixture in a spray tank shortly before use. Preferably the compositions of the invention should contain from about 0.01 to 95% by weight of the combination of an oxathiazine compound and amine oxides. More preferably this range is from 0.1 to 90% by weight. Most preferably this range is from 1 to 80% by weight, depending on the type of formulation to be selected for specific application purposes.

An emulsifiable concentrate is a liquid, homogeneous formulation to be applied as an emulsion after dilution in water. A suspension concentrate is a stable suspension of the active ingredients in a fluid intended for dilution with water before use. A soluble concentrate is a liquid, homogeneous formulation to be applied as a true solution of the active ingredients after dilution in water.

The compositions of the present invention may further comprise other adjuvants as known to the skilled person, such as, for example drying oils, anti-oxidants, UV absorbers, natural or regenerated mineral substances, solvents, dispersants, surfactants, wetting agents, adhesives, thickeners, binders, pigments or anti-freeze agents.

The compositions of the present invention may optionally further comprise quaternary ammonium salts such as quaternary ammonium salts of the trimethyl alkyl ammonium halide type, e.g. trimethyl decyl ammonium chloride, trimethyl dodecylammonium chloride, trimethyl tallow ammonium chloride, trimethyl oleyl ammonium chloride; or of the dimethyl alkyl benzyl ammonium type, e.g. dimethyl decyl benzyl ammonium chloride, dimethyldodecyl benzyl ammonium chloride, dimethyl hexadecylbenzyl ammonium chloride (commonly designated as "cetalkonium chloride"), dimethyl octadecyl benzyl ammonium chloride, dimethyl coco benzyl ammonium chloride, dimethyl tallow benzyl ammonium chloride; and particularly the dimethyl C₈₋₁₈alkyl benzyl ammonium chloride mixture which is commonly known as "benzalkonium chloride"; dimethyl dialkyl ammonium halides, e.g. dimethyl dioctyl ammonium chloride, dimethyl didecyl ammonium chloride, dimethyl didodecyl ammonium chloride, dimethyl dicoco ammonium chloride, dimethyl ditallow ammonium chloride, dimethyl octyl decyl ammonium chloride, dimethyl dodecyl octyl ammonium chloride, dimethyl dihydrogenated tallow ammonium chloride.

As already mentioned the compositions of the present invention may further comprise other active ingredients, such as fungicides, bactericides, acaricides, nematocides, insecticides or herbicides, in particular fungicides, for example so as to widen the spectrum of action or to prevent the build up of resistance. In many cases, this results in synergistic effects, *i.e.* the activity of the mixture exceeds the activity of the individual components.

As biocidal agents, which may be used in combination with the fungicidal formulations of the present invention there may be considered products of the following classes :
Fungicides :
   2-aminobutane; 2-anilino-4-methyl-6-cyclopropyl-pyrimidine; 2,6-di-chloro-N-(4-trifluoromethylbenzyl)benzamide; (E)-2-methoxyimino-N-methyl-2-(2-phenoxyphenyl)-acetamide; 8-hydroxyquinoline sulphate; methyl (E)-2-{2-[6-(2-cyanophenoxy)-pyrimidin-4-yloxy]-phenyl}-3-methoxyacrylate; methyl (E)-methoximino[alpha-(o-tolyloxy)-o-tolyl]acetate; 2-phenylphenol (OPP), aldimorph, ampropylfos, anilazine, benalaxyl, benodanil, benomyl, binapacryl, biphenyl, bitertanol, blasticidin-S, bupirimate, buthiobate, calcium polysulphide, captafol, captan, carbendazim, carboxin, quinomethionate, chloroneb, chloropicrin, chlorothalonil, chlozolinate, cufraneb, cymoxanil, cyprofuram, dichlorophen, diclobutrazol, diclofluanid, diclomezin, dicloran, diethofencarb, dimethirimol, dimethomorph, dinocap, diphenylamine, dipyrithion, ditalimfos, dithianon, dodine, drazoxolon, edifenphos, ethirimol, fenarimol, fenfuram, fenitropan, fenpiclonil, fenpropidin, fenpropimorph, fentin acetate, fentin hydroxide, ferbam, ferimzone, fluazinam, fludioxonil, fluoromide, flusulfamide, flutolanil, flutriafol, folpet, fosetyl-aluminium, fthalide, furalaxyl, furmecyclox, guazatine, hexachlorobenzene, hymexazol, imazalil, iminoctadine, iprobenfos (IBP), iprodione, isoprothiolane, kasugamycin, copper preparations such as: copper hydroxide, copper naphthenate, copper oxychloride, copper sulphate, copper oxide, oxine-copper and Bordeaux mixture, mancopper, mancozeb, maneb, mepanipyrim, mepronil, metalaxyl, methasulfocarb, methfuroxam, metiram, metsulfovax, myclobutanil, nickel dimethyldithiocarbamate, nitrothalisopropyl, nuarimol, ofurace, oxadixyl, oxamocarb, oxycarboxin, pefurazoate, pencycuron, phosdiphen, pimaricin, piperalin, polyoxin, prochloraz, procymidone, propamocarb, propineb, pyrazophos, pyrifenox, pyrimethanil, pyroquilon, quintozene (PCNB), sulphur and sulphur preparations, tecloftalam, tecnazene, thiabendazole, thicyofen, thiophanate-methyl, thiram, tolclophos- methyl, tolylfluanid, triadimefon, triadimenol, triazoxide, trichlamide, tridemorph, triflumizole, triforine, validamycin A, vinclozolin, zineb, ziram; isothia- and benzisothiazolone derivatives such as, e.g. 1,2-benzisothiazolone (BIT); fungicidal triazoles such as azaconazole, bromuconazole, cyproconazole, difenoconazole, epoxiconazole, fenbuconazole, fluquinconazole, flusilazole, hexaconazole, ketoconazole, metconazole, penconazole, propiconazole, tebuconazole, tetraconazole, and triticonazole; strobilurines such as azoxystrobin, metominostrobin, pyraclostrobin, kresoxim-methyl, trifloxystrobin, and picoxystrobin.
Bactericides :
   bronopol, dichlorophen, nitrapyrin, nickel dimethyldithiocarbamate, kasugamycin, octhilinone, furanecarboxylic acid, oxytetracyclin, streptomycin, tecloftalam, copper sulphate and other copper preparations.
Insecticides/Acaricides/Nematicides :
   abamectin, AC 303 630, acephate, acrinathrin, alanycarb, aldicarb, alphamethrin, amitraz, avermectin, AZ 60541, azadirachtin, azinphos A, azinphos M, azocyclotin, Bacillus thuringiensis, bendiocarb, benfuracarb, bensultap, beta-cyfluthrin, bifenthrin, BPMC, brofenprox, bromophos A, bufencarb, buprofezin, butocarboxin, butylpyridaben, cadusafos, carbaryl, carbofuran, carbophenothion, carbosulfan, cartap, CGA 157 419, CGA 184699, chloethocarb, chlorethoxyfos chlorfenvinphos, chlorfluazuron, chliormephos, chlorfenapyr, chlorpyrifos, chlorpyrifos M, cis-resmethrin, clocythrin, clofentezine, cyanophos, cycloprothrin, cyfluthrin, cyhalothrin, cyhexatin, cypermethrin, cyromazine, deltamethrin, demeton-M, demeton-S, demeton-S-methyl, diafenthiuron, diazinon, dichlofenthion, dichlorvos, dicliphos, dicrotophos, diethion, diflubenzuron, dimethoate, dimethylvinphos, dioxathion, disulfoton, edifenphos, emamectin, esfenvalerate, ethiofencarb, ethion, ethofenprox, ethoprophos, etrimphos, fenamiphos, fenazaquin, fenbutatin oxide, fenitrothion, fenobucarb, fenothiocarb, fenoxycarb, fenpropathrin, fenpyrad, fenpyroximate, fenthion, fenvalerate, fipronil, fluazinam, flucycloxuron, flucythrinate, flufenoxuron, flufenprox, fluvalinate, fonophos, formothion, fosthiazate, fubfenprox, furathiocarb, HCH, heptenophos, hexaflumuron, hexythiazox, imidacloprid, iprobenfos, isazophos, isofenphos, isoprocarb, isoxathion, ivemectin, lambda-cyhalothrin, lufenuron, malathion, mecarbam, mervinphos, mesulfenphos, metaldehyde, methacrifos, methamidophos, methidathion, methiocarb, methomyl, metolcarb, milbemectin, monocrotophos, moxidectin, naled, NC 184, NI 25, nitenpyram, omethoate, oxamyl, oxydemethon M, oxydeprofos, parathion A, parathion M, permethrin, phenthoate, phorate, phosalone, phosmet, phosphamdon, phoxim, pirimicarb, pirimiphos M, pirimiphos A, profenofos, promecarb, propaphos, propoxur, prothiofos, prothoate, pymetrozin, pyrachlophos, pyridaphenthion, pyresmethrin, pyrethrum, pyridaben, pyrimidifen, pyriproxifen, quinalphos, RH 5992, salithion, sebufos, silafluofen, sulfotep, sulprofos, tebufenozid, tebufenpyrad, tebupirimiphos, teflubenzuron, tefluthrin, temephos, terbam, terbufos, tetrachlorvinphos, thiafenox, thiamethoxam, thiodicarb, thiofanox, thiomethon, thionazin, thuringiensin, tralomethrin, triarathen, triazophos, triazuron, trichlorfon, triflumuron, trimethacarb, vamidothion, XMC, xylylcarb, zetamethrin.

Other biocidal agents that may be used in combination with the compositions of the present invention there may be considered products of the following classes : phenol derivatives such as 3,5-dichlorophenol, 2,5-dichlorophenol, 3,5-dibromophenol, 2,5-dibromophenol, 2,5-(resp. 3,5)-dichloro-4-bromophenol, 3,4,5-trichlorophenol, chlorinated hydrodiphenylethers such as, for example, 2-hydroxy-3,2'4'-trichlorodiphenylether, phenylphenol, 4-chloro-2-phenylphenol, 4-chloro-2-benzylphenol, dichlorophene, hexachlorophene; aldehydes such as formaldehyde, glutaraldehyde, salicylaldehyde; alcohols such as phenoxyethanol; antimicrobially active carboxylic acids and their derivatives; organometallic compounds such as tributyltin compounds; iodine compounds such as iodophores, iodonium compounds; mono-, di- and polyamines such as dodecylamine or 1,10-di(n-heptyl)-1,10-diaminodecane; sulfonium- and phosphonium compounds; mercapto compounds as well as their alkali, earth alkaline and heavy metal salts such as 2-mercaptopyridine-*N*-oxide and its sodium and zinc salt, 3-mercaptopyridazin-2-oxide, 2-mercaptoquinoxaline-1-oxide, 2-mercaptoquinoxaline-di-*N*-oxide, as well as the symmetrical disulfides of said mercapto compounds; ureas such as tribromo- or trichlorocarbanilide, dichlorotrifluoromethyldiphenylurea; tribromosalicylanilide; 2-bromo-2-nitro-1,3-dihydroxypropane; dichlorobenzoxazolon; and chlorohexidine.

The following examples are intended to illustrate and not to limit the scope of the present invention in all its aspects.

### Example 1 : modified EN113 test

Oven dried blocks (40 x 15 x 5 mm) of Scots pine (*Pinus sylvestris*, 504 kg/m³) and beech (*Fagus sylvatica*, 637 kg/m³) were vacuum treated with aqueous dilution of a formulation containing 1% bethoxazin in a 30% coco-DMAO aqueous solution (commercially known as Barlox®12 which is an aqueous solution containing 30% by weight of coco-DMAO) and stored for two days in a laminar flow cabinet. Depending on the amount of the said aqueous dilution uptaken in the treated blocks the amount of active ingredient, *i.e.* bethoxazin and coco-DMAO, can be determined and expressed in g/m³ of uptaken active ingredient (g a.i. /m³).

The sample blocks were placed in contact with the fungi (*Coriolus versicolor, Coniophora puteana* and *Gloeophyllum trabeum*) for 9 weeks at culture conditions promoting growth of the organisms. Blocks were then cleaned form adhering mycelium and their weight measured after oven drying. The difference between the oven dry weight at the start and end of the experiment were used to calculate the weight loss. The weight loss expressed in percentages for blocks treated with a formulation containing 1% bethoxazin and 30% coco-DMAO and a formulation containing bethoxazin dissolved in methanol are listed below.

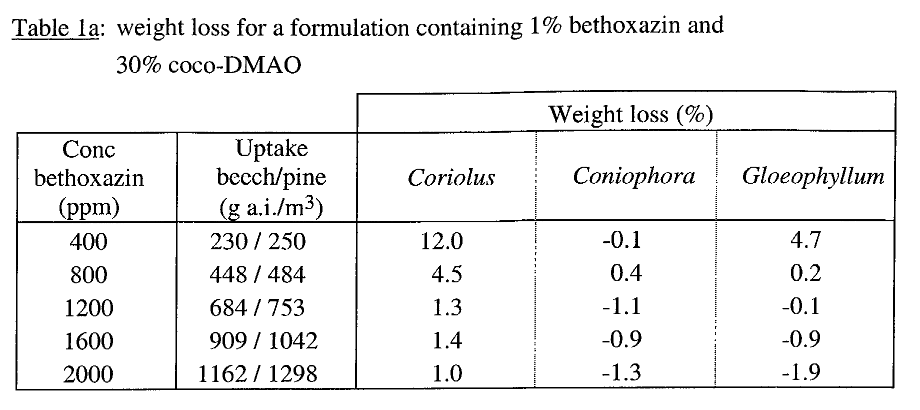

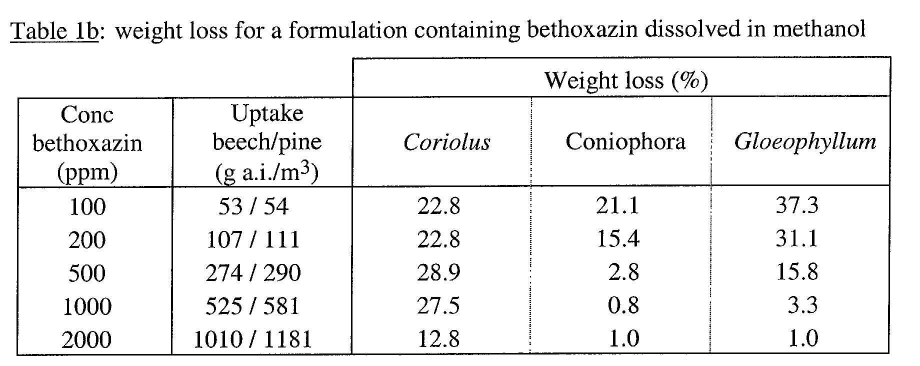

## Claims

1. A fungicidal composition comprising bethoxazin and an amine oxide, and a carrier.

2. A composition according to claim 1 wherein the amine oxide is selected from the group consisting of
(x) a trialiphatic substituted amine oxide,
(xi) an N-alkylated cyclic amine oxide,
(xii) a dialkylpiperazine di-N-oxide,
(xiii) an alkyldi(poly(oxyalkylene))amine oxide,
(xiv) a dialkylbenzylamine oxide,
(xv) a fatty amidopropyldimethyl amine oxide,
(xvi) a diamine oxide,
(xvii) a triamine oxide, and
(xviii) any combination of any of the foregoing.

3. A composition according to claim 2 wherein the amine oxide is selected from the group consisting of coco-alkyl (C₁₂-C₁₆) dimethylamine oxide, branched alkyl (C₁₀-C₁₄) dimethylamine oxide, octyl dimethylamine oxide, decyl dimethylamine oxide, dodecyldimethylamine oxide, tetradecyl dimethylamine oxide, hexadecyl dimethylamine oxide, octadecyl dimethylamine oxide, coco-alkyl-di(hydroxyethyl)amine oxide and tallow-alkyl-di(hydroxyethyl)amine oxide

4. A composition according to claim 3 wherein amine oxide is coco-alkyl (C₁₂-C₁₆) dimethylamine oxide.

5. A composition according to any of claims 1 to 4 wherein the weight ratio of bethoxazin to amine oxide ranges from 5:1 to 1:500.

6. A composition according to any of claims 1 to 4 wherein said composition comprising from 0.01% (w/v) to 20% (w/v) of bethoxazin and from 0.1% (w/v) to 50% (w/v) of amine oxide.

7. Use of amine oxides to enhance the activity of fungicidal compositions comprising bethoxazin.

8. Use according to claim 7 wherein the amine oxide is coco-alkyl (C₁₂-C₁₆) dimethylamine oxide.

9. A process for preparing a composition as claimed in any of claims 1 to 6, **characterized in that** bethoxazin and the amine oxides are intimately mixed with the carrier.

10. A method of preserving wood, wood products or biodegradable materials which comprises applying to the wood, wood products or biodegradable material a composition as claimed in any of claims 1 to 6.
